## Europäisches Patentamt
## European Patent Office
## Office européen des brevets

(11) Numéro de publication: **0 122 169**
**B1**

(12) **FASCICULE DE BREVET EUROPEEN**

(45) Date de publication du fascicule du brevet: **13.06.90**

(51) Int. Cl.⁵: **G 02 B 6/38**

(21) Numéro de dépôt: **84400448.1**

(22) Date de dépôt: **06.03.84**

(54) **Procédé et dispositif de raccordement de fibres optiques.**

(30) Priorité: 11.03.83 FR 8304082
20.04.83 FR 8306499

(43) Date de publication de la demande:
**17.10.84 Bulletin 84/42**

(45) Mention de la délivrance du brevet:
**13.06.90 Bulletin 90/24**

(84) Etats contractants désignés:
**AT BE CH DE FR GB IT LI LU NL SE**

(56) Documents cités:
DE-A-2 518 319     US-A-3 958 861
FR-A-2 360 896     US-A-4 111 522
GB-A-2 046 466     US-A-4 184 741

PATENT ABSTRACTS OF JAPAN, vol. 2, no. 45, 27 mars 1978, page 644 E 78; & JP-A-53 10445 (FURUKAWA DENKI KOGYO K.K.) 30-01-1978

THE BELL SYSTEM TECHNICAL JOURNAL, vol. 55, no. 8, octobre 1976, pages 1057-1067, American Telephone and Telegraph Company, New York, US; A.H. CHERIN et al.: "An injection-molded plastic connector for splicing optical cables"

(73) Titulaire: **ALLIANCE TECHNIQUE INDUSTRIELLE**
**Zone Industrielle de Saint-Guénault 6, rue Jean Mermoz Courcouronnes**
**F-91000 Evry (FR)**

(72) Inventeur: **Malavieille, François-Louis**
**6, rue de Vouillé**
**F-75015 Paris (FR)**

(74) Mandataire: **Plaçais, Jean-Yves et al**
**Cabinet Netter, 40, rue Vignon**
**F-75009 Paris (FR)**

(56) Documents cités:
PATENT ABSTRACTS OF JAPAN, vol. 1, no. 145, 25 novembre 1977, page 7265 E 77; & JP-A-52 82343 (SUMITOMO DENKI KOGYO K.K.) 07-09-1977

PATENT ABSTRACTS OF JAPAN, vol. 6, no. 153 (P-136)1037r, 20 aou7t 1982; & JP-A-57 76509 (NIHON ITA GLASS K.K.) 13-05-1982

Courier Press, Leamington Spa, England.

## Description

L'invention concerne le raccordement de fibres optiques.

On connaît déjà, pour réaliser cette fonction, les connecteurs de fibres optiques. Ceux-ci comprennent deux fiches dans lesquelles sont glissées les fibres à raccorder, et une troisième pièce ou raccord interposé entre les fiches et qui permet d'obtenir la continuité du guide de lumière. La caractéristique essentielle des connecteurs de fibres optiques est qu'ils sont prévus pour être assemblés et désassemblés à volonté par l'utilisateur. Cet avantage pratique essentiel est obtenu au prix d'une complexité technique non négligeable, bien connue de l'homme de l'art.

La présente invention concerne un dispositif d'un genre différent, qui a pour but, non pas de permettre la connexion amovible à volonté de fibres optiques entre elles mais au contraire de réaliser une connexion stable qui puisse être modifiée de temps à autre en fonction des besoins. Par analogie avec le domaine électrique, on peut considérer que la présente invention vient offrir une sorte de barrette de raccordement pour fibres optiues, alors que les connecteurs correspondraient au contraire à la famille des prises de courant.

A cet égard, un premier but de la présente invention est de fournir des moyens de raccordement à coût réduit et à mise en oeuvre simplifiée, qui sont particulièrement intéressants dans l'installation d'un réseau complet de télé-distribution par fibres optiques, par exemple. On sait que dans un tel réseau, il est nécessaire de raccorder ou de diviser des câbles multi-fibres, dans des boîtes ou armoires de jonction ou de dérivation, ce qui permet à l'exploitant du réseau d'établir ou de modifier des connexions vers les divers abonnés.

On pourrait remarquer qu'un connecteur de fibres optiques permet également cette fonction. L'inconvénient d'un connecteur est alors sa complexité technique déjà évoquée, accompagnée naturellement d'un coût supérieur. De plus, on sait que les connecteurs pour fibres optiques comportent deux pièces d'extrémités qui sont, en principe, inamovibles de chacune des fibres à laquelle elles sont associées.

De même, en laboratoire, il est souvent utile de disposer d'un moyen de raccordement fibre à fibre simple, rapide et performant, le montage d'un connecteur complet étant là encore long, cher, et inamovible de chacune des fibres comme on vient de l'indiquer.

Dans ce contexte, l'invention a également pour but de résoudre les délicats problèmes de raccordement des fibres bout à bout d'une manière simple, ces problèmes étant essentiellement dûs à la fragilité et à la dimension très réduite des fibres. On sait que la tendance actuelle va vers une réduction constante du diamètre de la partie centrale ou "coeur" des fibres optiques.

Une autre difficulté que la présente invention vise à résoudre est le fait que les fibres à raccorder peuvent avoir des diamètres légèrement différents du fait des tolérances de fabrication, de provenance, ou de lots différents. Le raccordement doit demeurer de qualité sensiblement constante, en dépit de ces variations.

Pour résoudre les problèmes ci-dessus, l'invention propose tout d'abord un procédé de raccordement de fibres optiques, qui comprend l'opération préalable consistant à

a) préparer les extrémités d'au moins deux fibres optiques pour leur raccordement.

Le procédé est caractérisé par l'opération suivante:

b) insérer les extrémités d'au moins deux fibres à raccorder, face à face, dans une rainure, ménagée sur une surface d'un support qui, au moins au niveau de ladite surface, est en matériau mou par rapport aux fibres et déformable élastiquement, tout en sollicitant légèrement les deux fibres l'une vers l'autre de façon à assurer le contact intime de leurs faces frontales; et tout en maintenant une pièce rigide surfacée en appui sur ladite surface du support, ce qui exerce une action de pression sur lesdites fibres, faisant naître une réaction radiale de la paroi de la rainure sur les fibres, assurant l'alignement de celles-ci.

La préparation des fibres peut se faire selon des techniques connues à cet effet. En particulier, l'obtention de faces frontales planes, perpendiculaires à l'axe des fibres et du type brillant miroir se fait de préférence de la manière décrite dans la Demand de Brevet Français No. 78 09703, au nom de la Demanderesse, et publiée sous le No. 2 422 604. Cette Demande antérieure décrit en effet un appareil pour sectionner les fibres optiques qui permet d'obtenir, par fracture, des faces frontales de fibres aptes à une bonne connexion. Ensuite, il est considéré actuellement comme avantageux d'enlever la gaine de chaque fibre à son extrémité.

En ce qui concerne l'opération b, celle-ci est, de préférence, réalisée de la manière suivante.

b1. on amène la surface frontale de l'une des fibres sensiblement à mi-longueur de la rainure;

b2. on fixe cette fibre par rapport au support;

b3. on amène la face frontale de la seconde fibre, dans la rainure, au contact de la face frontale de la première fibre; et

b4. on fixe également la seconde fibre par rapport au support, de l'autre côté.

La présente invention concerne également un dispositif de raccordement de fibres optiques qui met en oeuvre le procédé précité.

Ce dispositif comporte des parties communes avec certains dispositifs antérieurement connus: il comprend un support dont au moins une surface, réalisée en matériau mou, déformable élastiquement, comporte une rainure, propre à recevoir face à face les extrémités respectives de deux fibres optiques à raccorder, ainsi qu'un organe maintenu en appui sur la surface du support et sur les extrémités des fibres optiques. Des dispositions de ce genre se trouvent notamment dans les brevets américains 4 088 386, 4 102 561 et 4 257 674.

Toutefois dans ces documents antérieurs l'organe maintenu en appui sur la surface du support est systématiquement un autre corps en matériau mou, éventuellement muni de rainures, et l'on utilise donc dans ces documents antérieurs l'élasticité de deux pièces, disposées de part et d'autre des fibres, pour réaliser le calage de celles-ci en position axiale, et donc leur alignement.

Le dispositif suivant la présente invention utilise une combinaison de moyens différente.

Ce dispositif comprend les moyens précédemment définis, à savoir un support dont au moins une surface réalisée en matériau mou, déformable élastiquement, comporte une rainure, propre à recevoir face à face les extrémités respectives de deux fibres optiques à raccorder, extrémités dont chacune présente, de préférence, une face frontale plane, perpendiculaire à l'axe de la fibre, et à surface du type brillant miroir, ainsi qu'un organe maintenu en appui sur la surface du support et sur les extrémités des fibres optiques.

Selon la présente invention, cet organe comprend une pièce rigide surfacée, dont le maintien en appui sur ladite surface du support exerce une action de pression sur lesdites extrémités des fibres, faisant naître une réaction radiale de la paroi de la rainure sur les extrémités des fibres, et assurant ainsi l'alignement de celles-ci.

Ainsi, la présente invention va à l'encontre des enseignements des documents antérieurs, dans lesquels les deux parties venant de part et d'autre de la fibre optique sont déformables.

Au contraire la résente invention profite de l'état de surface excellente de ladite pièce rigide surfacée, et utilise celle-ci en coopération avec un bloc de matériau mou élastiquement déformable, pour réaliser le raccordement de deux fibres optiques ou, comme on le verra plus loin, de deux jeux de fibres optiques.

Selon une caractéristique particulièrement avantageuse de la présente invention, ladite pièce rigide surfacée est une plaque transparente, de préférence une plaque de verre d'épaisseur suffisante pour assurer sa rigidité.

Selon une autre caractéristique de l'invention, le dispositif comprend, de part et d'autre du support, deux brides permettant la fixation des fibres à connecter par rapport au support. Ces brides sont agencées de manière à produire une sollicitation des deux fibres l'une vers l'autre. Par la poussée axiale permanente ainsi exercée, on maintient dans le temps le contact étroit entre les deux faces frontales des fibres dans la rainure.

Dans un mode de réalisation multiple, le dispositif comporte plusieurs rainures, dont les axes sont, de préférence, sensiblement parallèles, ce qui permet le raccordement bout à bout, deux à deux, de fibres optiques appartenant à deux jeux différents. On peut de la sorte raccorder deux câbles multi-fibresentre eux, fibre par fibre, ou encore un câble multi-fibres avec une série de câbles mono-fibres.

La Demanderesse a maintenant observé que la partie surfacée de la plaque ou pièce rigide n'est pas nécessairement plane, et peut au contraire présenter une forme infléchie par rapport à l'axe de la rainure ou des rainures. De préférence, la partie surfacée de la pièce rigide possède une section droite fermée, celle-ci pouvant être circulaire ou sensiblement circulaire, ou bien polygonale ou sensiblement polygonale.

Dans un mode de réalisation avantageux, la partie surfacée de la plaque rigide et la surface porte-rainure sont deux surfaces homothétiques, quasi-complémentaires, se chevauchant légèrement au repos, leur mise en place l'une sur l'autre exerçant l'effort d'appui.

Plus généralement, la surface porte-rainure et la partie surfacée de la plaque rigide peuvent être deux surfaces homologues et/ou tangentes, aptes à exercer l'une sur l'autre ledit effort d'appui relatif par coopération de leurs formes respectives. La partie élastique peut notamment être réalisée en plusieurs pièces, dont c'est alors le contour externe ou enveloppe qui définit la surface porte-rainure.

Dans une première famille de réalisations, la partie élastique est à l'intérieur, et la pièce rigide à l'extérieur.

Dans une seconde famille de réalisations, la partie élastique est à l'extérieur, et la pièce rigide à l'intérieur. Dans ce dernier cas, lapiècerigide peut être munie d'un canal central, cette disposition étant avantageuse pour certaines applications.

D'autres caractéristiques et avantages de la présente invention apparaîtront à l'examen de la description détaillée qui va suivre, ainsi que des dessins annexés, sur lesquels:

la figure 1 illustre une réalisation monovoie du dispositif selon la présente invention, cette configuration permettant cependant de combiner plusieurs éléments monovoie pour former un système modulaire de connexion multi-voies, c'est-à-dire entre deux jeux de fibres optiques;

la figure 2 illustre en vue schématique de dessus le dispositif de la figure 1;

la figure 3 est une vue agrandie par rapport à la figure 2, avec éléments arrachés, permettant d'illustrer de manière plus détaillée la structure du dispositif des figures 1 et 2;

les figures 4 à 9 illustrent différentes formes particulières de la rainure selon la présente invention;

la figure 10 fait apparaître sous forme de vue en coupe longitudinale deux extrémités de fibres optiques mises en coopération l'une avec l'autre à travers un liquide adaptateur d'indice;

la figure 11 illustre de manière plus détaillée sous la forme d'une vue en coupe transversale la coopération d'un bloc de matière élastique avec une plaque rigide et l'extrémité d'une fibre optique;

la figure 12 est une vue en perspective illustrant un éxemple particulier de forme de rainure composite utilisable pour la mise en oeuvre de la présente invention, en travaillant à la fois sur une partie de la fibre qui est débarrassée de son enveloppe et sur une partie qui comporte encore l'enveloppe;

la figure 13 illustre une variante de la présente invention dans laquelle la partie en matériau mou du support est réalisée en plusieurs pièces;

la figure 14 illustre une variante de réalisation multi-voies d'un dispositif de raccordement selon la présente invention;

la figure 15 est une vue extérieure schématique d'un boîtier d'interconnexion de câbles optiques incorporant la présente invention;

la figure 16 est une vue en perspective d'un dispositif selon l'invention, à section droite circulaire, et à partie rigide à l'extérieur;

la figure 17 est une vue en perspective d'un dispositif selon l'invention, à section droite circulaire, et dont la partie rigide est à l'intérieur;

la figure 18 est une vue en perspective d'un dispositif selon l'invention, de section droite polygonale fermée, dans lequel la partie rigide est à l'extérieur;

la figure 19 est une vue en perspective d'un dispositif selon l'invention, à section droite polygonale fermée, dans lequel la partie rigide est à l'intérieur;

les figures 20 et 21 sont des vues en coupe de dispositifs comparables à celui de la figure 1, mais dans lesquels le support en matériau mou est réalisé en plusieurs pièces;

la figure 22 est une variante du dispositif selon l'invention, muni d'un perfectionnement qui permet la sollicitation axiale des deux fibres l'une vers l'autre d'une manière particulièrement simple, cette variante étant ici illustrée en vue perspective, l'un des dispositifs de fixation étant ouvert et l'autre fermé; et

la figure 23 est une vue de dessus correspondant à la figure 22, avec démontage du dispositif de fixation de gauche qui était en position ouverte sur la figure 22.

La technique des fibres optiques fait à de nombreux titres intervenir des formes. A cet égard, les dessins annexés sont à considérer comme faisant partie intégrante de la présente description, pour contribuer autant que nécessaire à la définition de l'invention et à la suffisance de la description de celle-ci.

Sur les figures, la référence numérique 1 désigne une première fibre optique, et la référence numérique 2 une seconde fibre optique. Leurs extrémités préparées par enlèvement de leurs enveloppes sont désignées par 11 et 21. La plupart du temps, le point de contact des deux extrémités n'est pas représenté.

Comme précédemment indiqué, les extrémités des deux fibres optiques sont préalablement préparées par enlèvement de leur gaine, et obtention de faces frontales à raccorder planes, perpendiculaires à leurs axes, et à surface du type brillant miroir. L'enlèvement de la gaine d'une fibre optique est considéré comme connu de l'homme de l'art. L'obtention de faces frontales planes perpendiculaires et à surface brillant miroir peut être avantageusement obtenue par application des enseignements de la demande de Brevet français 78 09703 de la Demanderesse, déjà citée.

Le procédé de l'invention fait usage ensuite d'un support qui est désigné dans son ensemble par la référence générale 3. Ce support comporte une embase 31, complétée latéralement de deux faces montantes 32 et 33, qui logent intérieurement une partie en matériau mou par rapport aux fibres et déformable élastiquement, désignée généralement par 4. Cette partie 4 comporte une surface supérieure désignée par 40, dans laquelle est pratiquée au moins une rainure notée 5.

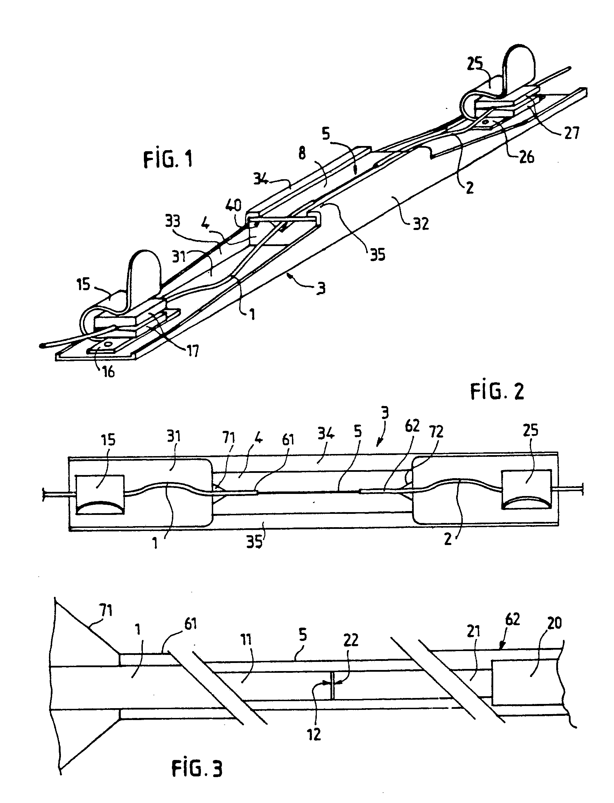

La rainure comporte (figure 2) une partie centrale désignée par 5, encadrée par deux parties latérales de section droite plus importante notées 61 et 62, celles-ci se terminant à leurs extrémités libres par des embouchures évasées 71 et 72. La rainure centrale 5 et les rainures latérales 61 et 62 peuvent être considérées chacune comme des surfaces cylindriques ou prismatiques s'appuyant sur une section droite déterminée, plus faible pour la partie 5 que pour les parties 61 et 62. Les embouchures 71 et 72 sont des surfaces tronconiques ou pyramidales qui s'appuient, en général, sur la même forme de section droite.

Une plaque rigide surfacée notée 8 est maintenue en appui sur la surface 40 du support 4. Dans le mode de réalisation représenté sur la figure 1, le maintien de la plaque rigide surfacée 8 est, de préférence, assuré par des griffes 34 et 35, solidaires des parties latérales 32 et 33 de l'embase 31, l'ensemble réalisant ainsi un ceinturage autour de la partie en matériau mou 4 et de la plaque supérieure 8.

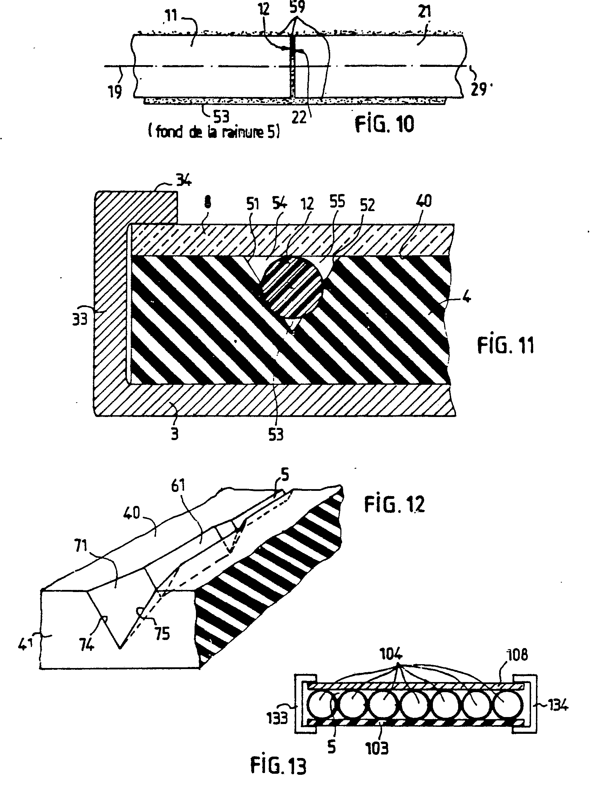

Les extrémités précédemment préparées de deux fibres optiques 1 et 2, extrémités notées 11 et 21, et se terminant par les faces frontales 12 et 22, sont insérées dans la rainure, face à face, tout en étant sollicitées légèrement l'une vers l'autre, de façon à assurer le contact intime de leurs faces frontales 12 et 22. Le maintien en appui de la plaque 8 sur la surface 40 du support 4 exerce une action de pression sur les extrémités des fibres, fait naitre une réaction radiale de la paroi (51, 52) de la rainure sur les extrémités des fibres, et assure l'alignement de celles-ci (figure 11).

De préférence, la mise en place des fibres optiques est réalisée séquentiellement. Dans ces conditions, cette opération de mise en place comprend les étapes suivantes:

on amène tout d'abord la face frontale 12 de l'une des fibres 1 sensiblement à mi-longueur de la rainure 5, comme le montre la figure 3;

on fixe cette fibre par rapport au support. La figure 1 montre un exemple d'une telle fixation, à l'aide d'une bride comprenant un étrier 15 fixé par sa plaque de base 16 sur l'embase 31, et formant griffe élastique de manière à enserrer deux pièces en matériau mou 17 sur le corps de la fibre 1;

on amène alors la face frontale 22 de la seconde fibre 2, toujours dans la rainure 5, au contact de la face frontale 12 de la première fibre 1 (figure 3);

faisant à nouveau référence à la figure 1, on fixe alors la seconde fibre 2 par rapport au support, de l'autre côté, à l'aide d'un autre étrier de serrage 25 dont la plaque de base 26 est fixée sur l'embase 31. Comme le précédent, ce dispositif de serrage comprend deux blocs en matériau mou 27 enserrant la fibre de part et d'autre sous l'effet de l'étrier 25.

Selon un aspect intéressant de la présente invention, chacune des étapes de fixation des deux fibres à connecter par rapport au support est réalisée de manière à assurer un faible flambage des deux fibres, flambage qui produit la sollicitation des deux fibres l'une vers l'autre, et par la poussée axiale permanente ainsi exercée, maintient dans le temps le contact étroit entre les deux faces frontales des fibres dans la rainure. Ce flambage peut être réalisé soit en plaçant les blocs de fixation 15 et 25 légèrement décalés axialement par rapport à l'axe de la rainure 5, soit en laissant ces deux blocs dans l'axe de la rainure, mais en les rapprochant du support 4 compte tenu de la longueur libre des fibres de manière à assurer le flambage de celles-ci.

De préférence, la rainure 5 est préalablement remplie d'un liquide adaptateur d'indice 59 (figure 10), ce qui améliore la transmission lumineuse d'une fibre à l'autre, de manière connue en soi. Lors de la mise en oeuvre de la présente invention, on a constaté que ce liquide adaptateur d'indice réalise également un auto-nettoyage de la zone comprise entre les deux faces frontales des fibres, à savoir 12 et 22, compte tenu de l'effet de piston produit par celles-ci dans la rainure 5 pendant leur mouvement relatif d'introduction selon les axes respectifs 19 et 29, le liquide étant chassé notamment du côté du fond 53 de la rainure 5 et des passages 54 et 55 (figure 11).

En pratique, il est très utile d'appliquer des rayonnements lumineux respectifs aux deux fibres connectées. Cela se fait soit par les extrémités libres des fibres, soit de préférence par injection latérale de lumière dans la fibre à travers son enveloppe. La lumière injectée peut être pulsée, en particulier dans le cas de l'injection latérale. Cela se traduit par l'apparition d'un point lumineux sur les faces frontales respectives 12 et 22 de chaque fibre. Lorsqu'on amène les fibres l'une vers l'autre, ces points lumineux se déplacent l'un vers l'autre, et les deux faces frontales 12 et 22 peuvent être considérées comme étant en contact intime quand les points lumineux se sont suffisamment atténués ou ont pratiquement disparu.

On a précédemment indiqué que les fibres sont préparées par enlèvement de leur gaine sur une certaine longueur, et obtention de faces frontales de propriétés aptes à assurer une bonne interconnexion. Sur les figures 1 à 3, on a noté 11 et 21 les parties dénudées des fibres 1 et 2, respectivement. Ces parties 11 et 21 viennent dans la rainure 5 proprement dite.

On obtient de la sorte, suivant la définition précitée, un dispositif de raccordement de fibres optiques comportant un support 4 dont au moins une surface 40, réalisée en matériau mou, déformable élastiquement, comporte une rainure droite 5, propre à recevoir face à face les extrémités respectives 11 et 12 de deux fibres optiques 1 et 2 à raccorder, extrémités dont chacune comporte une face frontale plane, respectivement 12 et 22, perpendiculaire à l'axe de la fibre, et à surface du type brillant miroir. Selon la présente invention, l'organe qui maintient les fibres en appui sur la surface du support est une plaque rigide surfacée 8, qui exerce l'action de pression précitée, avec les avantages qui en résultent.

Très avantageusement, de part et d'autre de ladite rainure 5, et en alignement sur celle-ci, sont prévues deux autres rainures 61 et 62, de section droite plus importante, adaptées aux dimensions d'ensemble de la fibre avec sa gaine. Ces parties 61 et 62 apparaissent mieux sur les figures 2, 3 et 12. Enfin, chacune des autres rainures en question se termine de préférence à son extrémité libre par une embouchure évasée. La figure 2 fait apparaître les deux embouchures évasées 71 et 72 terminant les rainures latérales 61 et 62, et les figures 3 et 12 font apparaître l'embouchure 71 à échelle agrandie.

Dans le mode de réalisation du dispositif selon l'invention qui a été décrit jusqu'à présent, la partie en matériau mou 4 du support est réalisée sous la forme d'un bloc unique.

La rainure proprement dite, dans sa partie centrale 5, peut revêtir diverses formes.

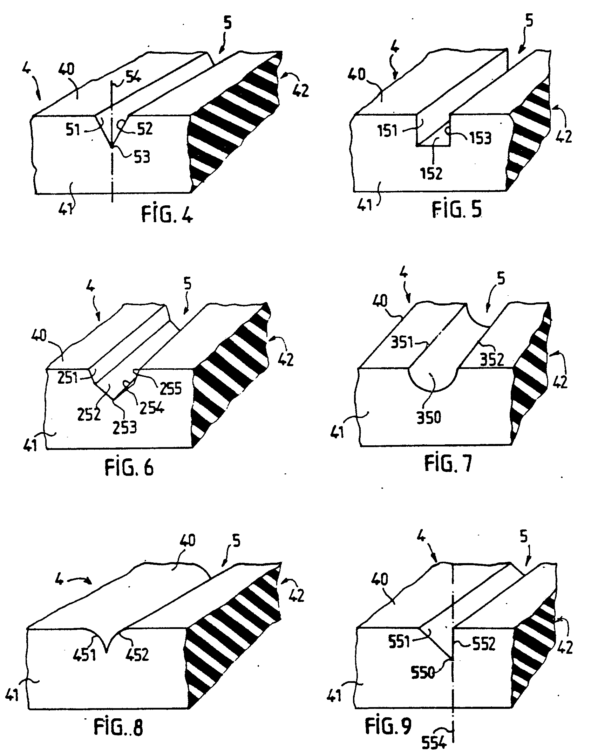

La figure 4 fait apparaître une première forme, où la rainure 5 possède une forme générale de V en section droite, avec deux côtés 51 et 52, et un sommet 53, les deux côtés 51 et 52 étant disposés symétriquement par rapport à un axe 54 perpendiculaire à la surface 40 du bloc. Si l'on se réfère immédiatement à la figure 12, on voit comment une telle rainure 5 de section triangulaire symétrique peut être reliée à une rainure adjacente 61 de dimension plus importante, pour recevoir sans serrage l'ensemble de la fibre avec sa gaine, y compris une transition progressive entre la rainure 5 et la rainure 61. Enfin, la rainure 61 se termine par une embouchure généralement conique 71, définie à son tour par deux côtés 74 et 75 qui sont toujours symétriques par rapport à une perpendiculaire à la surface 40. L'embouchure 71 aboutit sur la face latérale 41 du support 4.

La figure 13 fait apparaître une variante de réalisation de la présente invention, dans laquelle la partie en matériau mou du support est réalisée en plusieurs pièces. A cet effet, le support comporte une plaque inférieure rigide 103, sur laquelle sont fixés, par exemple par collage, une pluralité de profils en matériau mou notés 104, maintenus rigidement côte à côte, de façon à définir entre eux au moins une rainure 5. Sur la face des profils qui est opposée à la plaque 103 est disposée la plaque de verre 108 déjà citée, et les plaques 108 et 103 sont maintenues l'une par rapport à l'autre à l'aide de griffes 133 et 134. On observera que, dans ce mode de réalisation, la rainure 5 est en forme générale de V à côtés curvilignes, ceux-ci possédant des branches convexes vues de l'intérieur du V. Beaucoup des formes de rainures déjà citées peuvent être réalisées de la même manière.

On décrira maintenant aux figures 5 à 9 d'autres modes de réalisation de la forme de la rainure, qui peuvent être obtenues aussi bien avec un bloc unique en matériau mou, qu'avec une structure en plusieurs pièces telle que celle de la figure 13.

Sur la figure 5, la pièce en matériau mou 4 comporte une rainure de section droite généralement carrée ou rectangulaire, définie par deux côtés verticaux 151 et 153 réunis par un fond 152.

Sur la figure 6; la rainure 5 possède une section droite définie par quatre segments, successivement notés 251, 252, 254 et 255. Le fond de la rainure est noté 253.

Alors que la structure de la figure 6 demeure symétrique par rapport à une perpendiculaire à la surface 40, on a illustré sur la figure 9 une structure asymétrique. Dans ce mode de réalisation de la figure 9, la rainure comporte une section droite définie par un côté oblique 551, et un côté à la limite vertical 552, le fond de la rainure étant noté 550. Le côté vertical 552 coïncide avec la perpendiculaire 54 à la surface supérieure 40 de la pièce en matériau mou 4.

Dans les autres modes de réalisation décrits, la rainure possède une section droite définie par un ou plusieurs segments curvilignes, qui peuvent se combiner avec un ou plusieurs segments droits.

Sur la figure 7, la rainure 5 est en forme de gouttière, elle se compose donc d'un unique segment curviligne 350, qui se termine en 351 et 352 sur la face supérieure 40 du bloc 4.

Sur la figure 8 au contraire, la rainure 5 est définie par une section droite en forme de V curviligne à branches convexes 451 et 452, vues de l'intérieur du V.

On se rappellera maintenant que le dispositif des documents antérieurement connus utilisait deux pièces en matériau mou placées de part et d'autre de l'extrémité de la fibre en faisant confiance à l'élasticité des deux pièces pour réaliser une coaxialité convenable des deux fibres, et par conséquent leur alignement.

De façon à priori inattendue, il a été observé que le dispositif de la présente invention, utilisant une seule partie en matériau mou, et une plaque rigide disposée de l'autre côté de la fibre, permettent néanmoins un alignement des deux fibres à connecter d'une manière suffisante pour réaliser une bonne interconnexion optique des deux fibres. De premières expériences menées par la Demanderesse ont montré que les valeurs d'atténuation obtenues au niveau de l'interconnexion entre les deux fibres sont de l'ordre du dixième de décibel, ce qui constitue une excellente connexion optique.

Il a été observé que le dispositif et le procédé de la présente invention opèrent bien, même si les fibres à raccorder possèdent des diamètres légèrement différents du fait des tolérances de fabrication (provenance, ou lots différents). Les moyens de la présente invention sont également remarquables par leur simplicité. Enfin, ils s'accommodent très bien de la fragilité et de la dimension très réduite des fibres.

Dans un mode de réalisation particulier, la plaque supérieure 8 est, comme précédemment indiqué, une plaque de verre d'épaisseur suffisante pour assurer sa rigidité. On considère actuellement qu'une épaisseur de l'ordre du millimètre est suffisante. Le bloc en matériau mou, ou les profils en matériau mou, suivant le mode de réalisation, sont moulés ou usinés dans un élastomère du type élastomère de silicone, tels que le silastène vendu par la Société RHONE-POULENC. L'embase du support est par exemple métallique. Enfin, le milieu adaptateur d'indice est, de préférence, une huile de silicone telle que le liquide DOW CORNING no. SI 200 (fluidité 50 cp).

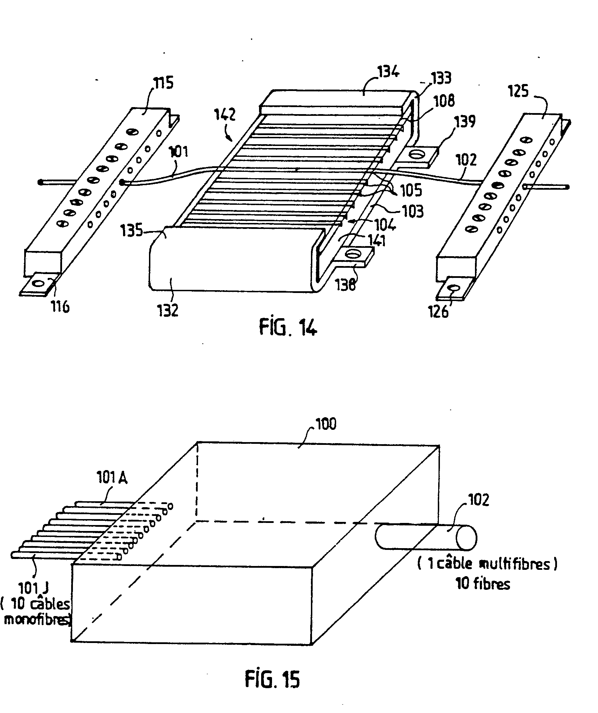

On décrira maintenant en référence aux figures 14 et 15 un mode de réalisation plus évolué de la présente invention.

Dans ce mode de réalisation, la partie en matériau mou, notée maintenant 104, comporte plusieurs rainures 105. Dans un but de simplification, les rainures 105 ont été illustrées sur la figure 14 comme de simples rainures droites. De prérérence, en pratique, il s'agit de rainures centrales prolongées par des rainures latérales de dimension plus importante et des embouchures d'extrémités, de la manière illustrée par exemple sur la figure 12. L'embase 103 est munie de pattes 138 et 139 qui permettent sa fixation. Latéralement, cette embase 103 se complète de montants 132 et 133 qui viennent rejoindre en partie supérieure les griffes 134 et 135 assurant la fixation et le maintien de la plaque de verre 108, et le ceinturage de cette plaque 108 avec le bloc en matériau mou 104, comme précédemment indiqué. Les faces latérales du bloc en matériau mou sont notées 141 et 142. Sur la figure 14, une seule connexion entre fibres est illustrée, les fibres étant notées 101 et 102, et venant se placer bout à bout à l'intérieur de l'une des rainures 105.

De part et d'autre du dispositif 103 sont placées par exemple deux brides 115 et 125, munies de pattes de fixation telles que 116 et 126. Les deux brides sont munies de passages traversants dans lesquels sont fixées les fibres non dénudées telles que 101 et 102. Chaque fibre est logée dans un manchon élastomère (non visible) qui passe dans un canal 118 où il est maintenu par une vis 119. Canal et vis sont de préférence en matière synthétique. On évite ainsi la rupture et des microcourbures des fibres optiques, qui nuiraient à leur qualité de transmission de lumière. On reconnaît également le flambage réalisé sur les deux fibres optiques 101 et 102.

On voit immédiatement que le dispositif de la figure 14 permet l'interconnexion deux à deux de fibres optiques appartenant respectivement à deux jeux différents comprenant chacun dix fibres optiques (bien qu'une seule fibre optique soit représentée dans un but de simplification).

On se référera maintenant à 1 figure 15, qui illustre schématiquement un boîtier de protection 100 enfermant un dispositif du typeillustré sur la figure 14. Ce boîtier 100 comporte des passages permettant l'arrivée de façon étanche des câbles à fibres optiques à connecter à l'intérieur du boîtier. Bien que l'on puisse connecter deux câbles multi-fibres de dix fibres chacun, le boîtier de la figure 15 est illustré dans une réalisation un peu différente, où entrent d'un côté dix câbles monofibre notés respectivement 101A à 101J, tandis que sort de l'autre côté un câble multi-fibres, à dix fibres' noté 102.

Les pattes de fixation 116, 138, 139 et 126 de la figure 14 sont naturellement fixées sur le corps du boîtier 100 de la figure 15.

On décrira maintenant d'autres modes de réalisation de l'invention, dans lesquels la pièce ou plaque rigide n'est plus plane. Dans ceux-ci, les sections droites respectives des différentes parties de la rainure, en particulier de la partie centrale 5, peuvent faire l'objet d'un ensemble des variantes décrites plus haut. Pourront s'appliquer également les autres aspects suivants:

la fixation des fibres dans le dispositif selon l'invention, avec un léger flambage de la fibre entre sa fixation et le dispositif;

l'utilisation d'un liquide adaptateur d'indice, et l'effet de piston exercé par l'extrémité de la fibre sur celui-ci;

l'usage de rayonnements lumineux pour déterminer le bon alignement de deux fibres à connecter;

l'utilisation préférentielle d'une pièce externe qui soit transparente, sinon sur tout le spectre de lumière visible, du moins sur une partie du spectre qui soit suffisante pour permettre de voir les fibres à travers la pièce, le cas échéant;

le fait que le dispositif proposé puisse aussi bien s'appliquer à une seule fibre qu'à plusieurs.

Enfin, bien entendu, on admettra dans la suite que les deux fibres à raccorder sont convenablement préparées, par obtention de faces frontales à raccorder planes, perpendiculaires à leurs axes, et à surface du type brillant miroir, et de préférence par enlèvement de leurs gaines protectrices sur une longueur suffisante.

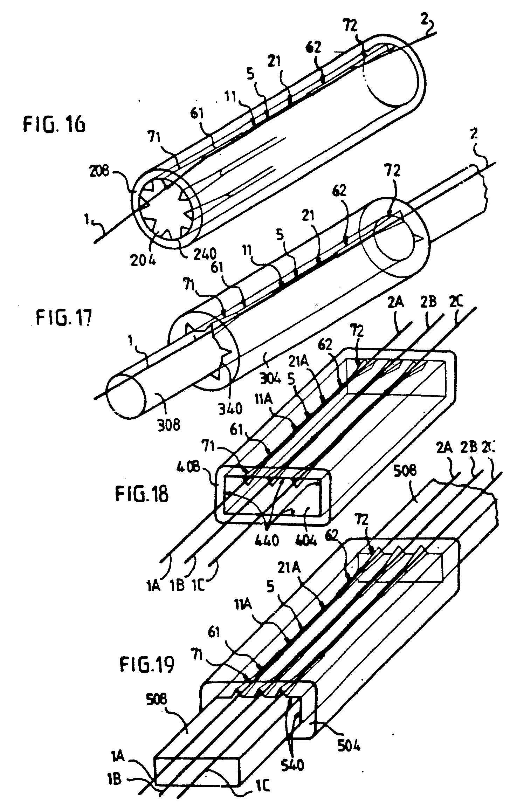

Sur la figure 16, la pièce rigide 208 est un tube de verre, cylindrique, dont la section droite est une couronne circulaire. A l'intérieur est emmanché le support en matériau mou 204, de forme générale cylindrique, muni en périphérie de sept rainures régulièrement réparties. Le contour externe de cette pièce 204 définit la surface porte-rainure 240. Une seule de ces rainures est illustrée en détail. Comme précédemment indiqué, on notera d'ailleurs que le dispositif peut ne comporter qu'une seule rainure.

La figure 17 illustre la disposition réciproque, dans laquelle la pièce rigide est à l'intérieur, formant un cylindre 308. Sur ce cylindre est emmanché le support en matériau mou 304, dont la section droite est en forme de couronne circulaire. Il porte intérieurement sept rainures dont une seule est représentée (une seule rainure d'ailleurs pourrait être utilisée). La surface porte-rainure est notée 340.

Au lieu des sections droites rigoureusement circulaires représentées sur les figures 16 et 17, on peut utiliser des sections droites sensiblement circulaires, par exemple des polygones réguliers.

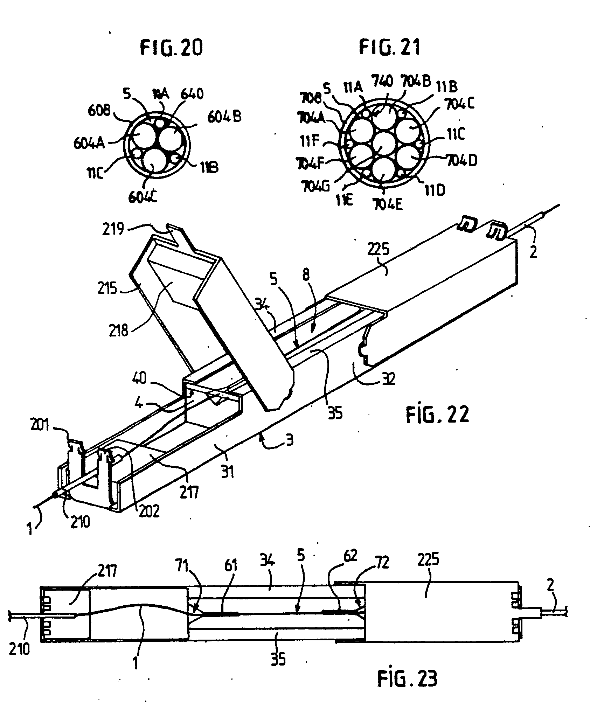

Les figures 18 et 19 llustrent un autre mode de réalisation, dans lequel les sections droites sont fermées et polygonales, mais non régulières. L'homme de l'art comprendra qu'on peut aussi utiliser des sections droites sensiblement polygonales, où par exemple, les angles sont arrondis.

Sur la figure 18, comme sur la figure 16, la pièce rigide, notée 408 est à l'extérieur. Le support en matériau mou 404 est à l'intérieur, et porte sur sa face supérieure trois rainures. La surface fermée qui porte les rainures dans ce support 404 est: notée dans son ensemble, 440. D'un côté, arrivent trois fibres 1A, 1B, 1C. De l'autre arrivent trois fibres correspondantes 2A, 2B, 2C. En considérant par exemple les fibres 1A et 2A, leurs extrémités 11A et 21A se rejoignent sensiblement au milieu de la rainure centrale 5.

A nouveau, la figure 19 illustre une disposition réciproque de celle de la figure 18, dans laquelle la pièce rigide 508 est à l'intérieur, sa section droite étant un rectangle droit. Le support en matériau mou 504 est alors à l'extérieur; sa surface interne porte, sur son côté haut, trois rainures comme précédemment. Cette surface porte-rainure est désignée dons son exemple par 540 (elle comporte en section droite les quatre côtés internes du support 504).

Dans les modes de réalisation qui viennent d'être décrits, la partie surfacée de la plaque rigide et la surface porterainure sont deux surfaces homothétiques, quasi-complémentaires, et qui se chevauchent légèrement au repos En d'autres termes, les dimensions extérieures de la pièce interne — support mou ou pièce rigide — sont supérieures aux dimensions intérieures de la pièce externe — pièce rigide ou support mou, respectivement. Ainsi, la mise en place des deux pièces l'une sur l'autre exerce un effort d'appui qui se traduira par l'action de pression sur l'extrémité des fibres, et la réaction radiale de la paroi de la rainure sur les extrémités des fibres qui assure l'alignement de celles-ci en coopération avec la pièce rigide.

Plus généralement, la surface porte-rainure et la partie surfacée de la pièce rigide peuvent être deux surfaces homologues et/ou tangentes, aptes à exercer l'une sur l'autre ledit effort d'appui relatif par coopération de leurs formes respectives. Une telle disposition est illustré sur les figures 20 et 21, où le dispositif apparaît en section droite. Dans les deux cas, la pièce rigide est à l'extérieur; elle est notée 608 sur la figure 20 et 708 sur la figure 21, et présente, dans les deux cas, la forme d'une couronne circulaire en section droite. Placé à l'intérieur, le support en matériau mou est ici réalisé en plusieurs pièces. Sur la figure 20, il s'agit de trois profils en matériau mou, de section droite par exemple circulaire et de même diamètre (au niveau de la partie 5 de la rainure). Le contour externe défini par l'ensemble de ces trois profils 604A à 604C définit la surface porte-rainure 640. En effet, des rainures se trouvent alors définies entre ces trois profils et la surface intérieure du tube 698. Dans chacune de ces rainures sont logées trois extrémités de fibres, notées respectivement 11A à 11C.

La figure 21 illustre une disposition semblable, mais dans laquelle le support en matériau mou comporte six profils de même diamètre, régulièrement répartis autour d'un septième, profil central. Les six profils sont notés 704A à 704F, et le profil central 704G. La périphérie externe des profils définit la surface porte-rainure 740, et dans les rainures sont logées les extrémités de fibres 11A à 11F.

Lorsqu'elle est à l'extérieur la pièce rigide est de préférence en verre, ou en un autre matériau rigide transparent. Le support en matériau mou, ou les profils en matériau mou sont moulés ou usinés dans un élastomère du type élastomère de silicone, tel que le silastène vendu par la Société RHONE-POULENC.

Lorsqu'elle est à l'intérieur, la pièce rigide peut être également en verre, ou encore en tout autre matériau rigide, métallique ou non. Le support de rainure en matériau mou qui est à l'extérieur peut alors être soit l'un des élastomères déjà cités, soit un autre matériau synthétique de propriétés mécaniques comparables, et qui soit transparent sur au moins une partie du spectre visible, pour faciliter le contrôle de la mise en connexion des fibres optiques.

Dans le but de faciliter la mise en oeuvre et le contrôle des connexions de fibres selon l'invention, on a cherché à améliorer la visibilité des fibres à travers la plaque ou le tube de verre, de façon à permettre à l'utilisateur de localiser visuellement la zone de connexion. Il a été constaté qu'on atteignait le but recherché en teintant très légèrement les extrémités de fibres sur quelques centimètres à l'aide, par exemple, d'un "crayon feutre" noir du commerce type Onyx Marker (marque déposée). Le dépôt d'encre sur la fibre étant alors très mince, très adhérent, parfaitement visible, et n'affectant pas le centrage des fibres. La fracture des fibres se fait de préférence après ce dépôt d'encre.

Les figures 22 et 23 montrent une variante perfectionnée de l'invention, et se comparent aux figures 1 et 2.

Le perfectionnement concerne essentiellement les moyens de fixation des deux fibres optiques à connecter, de part et d'autre de la rainure.

A ses extrémités l'embase 31 du support 3 est munie à chaque fois de deux languettes repliées vers le haut 201 et 202, dont la partie supérieure est conformée en moyens de clipsage. Contre ces languettes vient se placer en appui axial un bloc de matériau mou 217 tel qu'un élastomère, en principe plus adhérent à la fibre que celui dont est faite la rainure 5.

L'extrémité de la fibre optique 1 est enfilée dans un souplis seau 210, puis la partie dégainée de la fibre optique est insérée dans la rainure, jusqu'à venir pratiquement au contact de l'autre fibre optique (supposée déjà introduite et immobilisée par l'autre fixation 225). Il n'est pas nécessairement besoin de s'assurer du contact intime entre les extrémités des deux fibres optiques.

Le souplisseau 210 est placé de façon qu'il ne loge sensiblement que la moitié de la partie de la fibre optique 1 qui repose sur le bloc d'élastomère 117.

Une portière 215 est fixée à pivotement sur le support 3. Intérieurement, la portière 215 loge un bloc d'élastomère 218 homologue du bloc 217. Le haut de la portière 215 est muni d'une languette 219 qui vient s'insérer entre les deux languettes 201 et 202, lesquelles peuvent alors venir en prise sur la portière et l'immobiliser par clipsage.

De façon tout à fait surprenante, il a été observé que, lorsque les deux blocs 217 et 218 sont appuyés l'un sur l'autre, la fibre optique 1 est naturellement sollicitée axialement pour pénétrer dans la rainure et venir au contact de la fibre optique 2 qui s'y trouve déjà.

Ce moyen particulièrement simple permet d'assurer avec une grande sécurité l'interconnexion de deux fibres optiques.

La position intermédiaire de l'extrémité droite du souplisseau 10 sur le bloc 217 semble contribuer à l'obtention de cette poussée axiale vers la droite de la figure 1. Toutefois, des expériences ont été conduites en l'absence de souplisseau. Là encore la fibre optique 1 est sollicitée vers la droite, la sollicitation étant toutefois moins importante. La Demanderesse estime actuellement que les phénomènes impliqués sont les suivants: le bloc 217 est en appui par sa face gauche contre les languettes 201 et 202. Lorsqu'on appuie sur le bloc homologue 218, il se produit une compression du bloc 217, lequel ne peut se dilater que vers la droite, en sollicitant par conséquent la fibre optique 1. Lorsque l'on utilise un souplisseau, il semble que l'appui latéral du bloc 217 sur les languettes 201 et 202 ne soit plus nécessaire.

Enfin, il est apparu que la fibre optique 1 ne doit plus subir nécessairement un léger flambage entre sa fixation par les blocs 217 et 218 et son guidage par le bloc rainuré 4.

Par ailleurs, quoique avantageux pour une très bonne transmission de lumière, le milieu adaptateur d'indice peut être omis en certaines applications.

**Revendications**

1. Procédé de raccordement de fibres optiques, du type comprenant l'opération préliminaire consistant à:

a/. préparer les extrémités d'au moins deux fibres optiques pour leur raccordement;

caractérisé par l'opération suivante:

b/. insérer les extrémités d'au moins deux fibres à raccorder, face à face, dans une rainure (5), ménagée sur une surface d'un support (4) qui, au moins au niveau de ladite surface, est en matériau mou par rapport aux fibres et déformable élastiquement, tout en sollicitant légèrement les deux fibres (1, 2) l'une vers l'autre de façon à assurer le contact intime de leurs faces frontales; et tout en maintenant une pièce rigide surfacée (8) en appui sur ladite surface du support, ce qui exerce une action de pression sur lesdites fibres, faisant naître une réaction radiale de la paroi de la

rainure sur les fibres, assurant l'alignement de celles-ci.

2. Procédé selon la revendication 1, caractérisé en ce que l'opération b/. comprend les étapes suivantes:

b1. amener la face frontale (12) de l'une des fibres sensiblement à mi-longueur de la rainure;

b2. fixer cette fibre par rapport au support (15),

b3. amener la face frontale (22) de la seconde fibre, dans la rainure au contact de la face frontale (12) de la première fibre; et

b4. fixer également la seconde fibre par rapport au support, de l'autre côté (25).

3. Procédé selon la revendication 2, caractérisé en ce que chacune des étapes defixation b2 et b4 est pratiquée de manière à solliciter les deux fibres l'une vers l'autre, ce qui, par la poussée axiale permanente ainsi exercée, maintient dans le temps le contact étroit entre les deux faces frontales des fibres dans la rainure.

4. Procédé selon l'une des revendications 1 à 3, caractérisé en ce que la rainure est préalablement remplie d'un liquide adaptateur d'indice (59), ce qui, en plus d'améliorer la transmission lumineuse d'une fibre à l'autre réalise également un auto-nettoyage de la zone comprise entre les deux faces frontales des fibres, compte tenu de l'effet de piston produit par les faces frontales des deux fibres dans la rainure pendant leur mouvement relatif d'introduction.

5. Procédé selon l'une des revendications 1 à 4, caractérisé en ce que ladite pièce rigide (8) est transparente.

6. Procédé selon la revendication 5, caractérisé en ce que l'étape b comprend en outre l'application de rayonnements lumineux respectifs aux deux fibres à connecter, ce qui se traduit par l'apparition d'un point lumineux sur la face frontale de chaque fibre, les deux faces frontales étant considérées comme en contact intime quand les points lumineux se sont atténués ou ont pratiquement disparu.

7. Procédé selon l'une des revendications 5 et 6, caractérisé en ce que les extrémités préparées des fibres optiques sont en outre colorées latéralement.

8. Dispositif de raccordement de fibres optiques, du type comprenant un support (3, 4) dont au moins une surface (40), réalisée en matériau mou, déformable élastiquement, comporte une rainure (5), propre à recevoir face à face les extrémités respectives (12, 22) de deux fibres optiques à raccorder, ainsi qu'un organe maintenu en appui sur la surface du support et sur les extrémités des fibres optiques, caractérisé en ce que cet organe comprend une pièce rigide surfacée (8), dont le maintien en appui sur ladite surface du support exerce une action de pression sur lesdites extrémités des fibres, faisant naître une réaction radiale de la paroi de la rainure sur les extrémités des fibres et assurant ainsi l'alignement de celles-ci.

9. Dispositif selon la revendication 8, caractérisé en ce que le support comprend une embase rigide (3) soutenant sa partie en matériau mou (4), et en ce que l'embase comprend également des griffes (34, 35) prenant appui sur cette embase et sur la pièce rigide pour assurer le maintien de celle-ci en appui sur ladite surface du support, réalisant ainsi un ceinturage autour de la partie en matériau mou et de la plaque rigide surfacée.

10. Dispositif selon l'une des revendications 8 et 9, caractérisé en ce que la partie en matériau mou du support est un bloc (4).

11. Dispositif selon l'une des revendications 8 et 9, caractérisé en ce que la partie en matériau mou est en plusieurs pièces (104).

12. Dispositif selon l'une des revendications 8 à 11, caractérisé en ce que ladite pièce rigide surfacée est une plaque transparente (8).

13. Dispositif selon la revendication 12, caractérisé en ce que ladite pièce rigide surfacée transparente est une plaque de verre (8).

14. Dispositif selon l'une des revendications 8 à 13, caractérisé en ce qu'il comprend de part et d'autre du support deux brides (15-17; 25-27) permettant la fixation des fibres à connecter par rapport au support, de manière à solliciter les deux fibres l'une vers l'autre, ce qui, par la poussée axiale permanente ainsi exercée, maintient dans le temps le contact étroit entre les deux faces frontales des fibres dans la rainure.

15. Dispositif selon l'une des revendications 8 à 14, caractérisé en ce que la rainure (5) possède une section droite comprenant des lignes brisées.

16. Dispositif selon la revendication 15, caractérisé en ce que la section droite de la rainure (5) est en forme de V.

17. Dispositif selon l'une des revendications 8 à 16, caractérisé en ce que la rainure (5) possède une section droite comprenant un ou plusieurs segments curvilignes.

18. Dispositif selon l'une des revendications 8 à 17, caractérisé enceque la rainure (5) est symétrique par rapport à un plan perpendiculaire à ladite surface en matériau mou.

19. Dispositif selon l'une des revendications 8 à 18 caractérisé en ce que, de part et d'autre de ladite rainure (5) et en alignement sur celle-ci, sont prévues deux autres rainures (61, 62) de section droite plus importante, adaptées aux dimensions d'ensemble de la fibre avec sa gaine.

20. Dispositif selon l'une des revendications 8 à 19, caractérisé en ce que l'extrémité libre des rainures est conformée en embouchure évasée (71, 72).

21. Dispositif selon l'une des revendications 8 à 20, caractérisé par le fait qu'il comporte plusieurs rainures droites (105) d'axes sensiblement parallèles, ce qui permet le raccordement bout à bout, deux à deux, de fibres optiques appartenant à deux jeux différents.

22. Dispositif de raccordement de fibres optiques selon l'une des revendications 8 à 21, comprenant une partie-support (204, 304, etc), qui définit une surface (240, 340, etc), réalisée en matériau mou, déformable élastiquement, et munie d'une ou plusieurs rainures (5) propres chacune à recevoir face à face les extrémités (11, 12) de deux fibres optiques (1, 2) à raccorder, ainsi qu'une pièce rigide surfacée (208, 308, etc), dont le maintien en appui sur ladite surface de la partie-support exerce une action de pression sur les extrémités des fibres, faisant naître une réaction radiale de la paroi de la rainure sur les extrémités des fibres et assurant l'alignement de celles-ci, caractérisé en ce que la partie surfacée de la pièce rigide (208, 308, etc) est de forme infléchie par rapport à l'axe de la rainure ou des rainures.

23. Dispositif selon la revendication 22, caractérisé en ce que la partie surfacée de la pièce rigide (208, 308, etc) possède une section droite fermée.

24. Dispositif selon la revendication 23, caractérisé en ce que la partie surfacée de la pièce rigide (208, 308) possède une section droite circulaire ou sensiblement circulaire.

25. Dispositif selon la revendication 23, caractérisé en ce que la partie surfacée de la pièce rigide (408, 508) possède une section droite fermée polygonale ou sensiblement polygonale.

26. Dispositif selon l'une des revendications 22 à 25, caractérisé en ce que la partie surfacée de la plaque rigide (208, 308, 408, 508) et la surface porte-rainure (204, 304, 404, 504) sont deux surfaces homothétiques, quasi-complémentaires, se chevauchant légèrement au repos, leur mise en place l'une sur l'autre exerçant l'effort d'appui.

27. Dispositif selon l'une des revendications 22 à 26, caractérisé en ce que la surface porte-rainure (640, 740) et la partie surfacée de la pièce rigide (608, 708) sont deux surfaces homologues et/ou tangentes, aptes à exercer l'une sur l'autre ledit effort d'appui relatif par coopération de leurs formes respectives.

28. Dispositif selon l'une des revendications 22 à 27, caractérisé en ce que la partie-support élastique (604, 704) est réalisée en plusieurs pièces, dont le contour externe définit la surface porte-rainure (640, 740).

29. Dispositif selon l'une des revendications 22 à 28, caractérisé en ce que la partie-support élastique (204, 404) est à l'intérieur, et la pièce rigide (208, 408) à l'extérieur.

30. Dispositif selon l'une des revendications 22 à 29, caractérisé en ce que la partie-support élastique (304, 504) est à l'extérieur, et la pièce rigide (308, 508) à l'intérieur.

31. Dispositif selon l'une des revendications 22 à 30, caractérisé en ce que la pièce externe est transparente, au moins en partie.

32. Dispositif selon l'une des revendications 22 à 31, caractérisé en ce que la pièce rigide est en verre.

33. Dispositif selon la revendication 14, caractérisé en ce que chaque bride comprend, du côté du support, un bloc de matériau mou logé en butée axiale sur son côté opposé à la rainure, et un organe articulé comportant un bloc de matériau mou homologue susceptible de venir en appui sur le premier, ce qui a pour effet de solliciter la fibre logée entre ces deux blocs en direction de la rainure.

34. Dispositif selon la revendication 33, caractérisé en ce que la partie de la fibre tenue entre ces deux blocs est partiellement logée dans un tube tel qu'un souplisseau.

**Patentansprüche**

1. Verfahren zum Verspleißen von Lichtleitfasern, mit einem vorbereitenden Verfahrensschritt, der im

a) Vorbereiten der Enden von mindestens zwei Lichtleitfasern für deren Verspleißung besteht, gekennzeichnet durch den folgenden Verfahrensgang:

b) Einführen der Enden von mindestens zwei miteinander zu verspleißenden und einander gegenüberstehenden Fasern in eine Nut (5), die auf einer Auflagefläche (4) ausgebildet ist, welche zumindest in Höhe der Fläche aus einem im Vergleich zu den Fasern weichen und elastisch verformbaren Material besteht, wobei die beiden Fasern (I, 2) gegeneinander in der Weise leicht belastet werden, daß der enge Kontakt ihrer beiden Vorderflächen gewährleistet ist, und wobei ein oberflächenbehandeltes unelastisches Teil (8) so in Anlage gegen die Auflagefläche gehalten wird daß die Fasern druckbeaufschlagt werden, wodurch eine Gegenkraft der Wandung der Nut auf die Fasern in radialer Richtung hervorgerufen wird. durch welche deren Axialität gewährleistet ist.

2. Verfahren nach Anspruch 1, dadurch gekennzeichnet, daß der Arbeitsgang b) die folgenden Einzelschritte umfaßt:

b1) Vorschieben der Vorderseite (12) einer der Fasern im wesentlichen bis zur Hälfte der Länge der Nut;

b2) Fixieren dieser Fasern gegenüber der Auflage (15),

b3) Vorschieben der Vorderseite (22) der zweiten Faser in der Nut bis zur Berührung mit der Vorderseite (12) der ersten Faser; und

b4) Fixieren auch der zweiten Faser gegenüber der Auflage auf der anderen Seite (25).

3. Verfahren nach Anspruch 2, dadurch gekennzeichnet, daß jeder der Fixierschritte b2 und b4 so ausgeführt wird, daß die beiden Fasern gegeneinander gespannt werden, wodurch unter der auf diese Weise aufgebrachten dauernd wirksamen Axialkraft der enge Kontakt zwischen den beiden Vorderseiten der Fasern in der Nut über einen längeren Zeitraum aufrechterhalten wird.

4. Verfahren nach einem der Ansprüche 1 bis 3, dadurch gekennzeichnet, daß die Nut zuvor mit einer Flüssigkeit zur Indexanpassung (59) gefüllt wird, die einerseits den Grad der Lichtübertragung von einer Faser zur anderen verbessert und andererseits unter Berücksichtigung der Kolbenwirkung der beiden Fasern in der Nut während ihrer relativen Einführbewegung eine Selbstreinigung des zwischen den beiden Vorderseiten der Fasern liegenden Bereichs bewirkt.

5. Verfahren nach einem der Ansprüche 1 bis 4, dadurch gekennzeichnet, daß das unelastische Teil (8) lichtdurchlässig ist.

6. Verfahren nach Anspruch 5, dadurch gekennzeichnet, daß der Arbeitsgang b) zusätzlich den Schritt des Anlegens von Lichtstrahlung jeweils an die beiden zu verbindenden Fasern umfaßt, was zum Erscheinen eines Lichtpunkts auf der Vorderseite jeder Faser führt, wobei eine enge Berührung zwischen den beiden Vorderseiten als erreicht gilt, sobald die Lichtpunkte sich abschwächen bzw. praktisch verschwunden sind.

7. Verfahren nach einem der Ansprüche 5 und 6, dadurch gekennzeichnet, daß die vorbereiteten Enden der Lichtleitfasern zusätzlich seitlich eingefärbt werden.

8. Vorrichtung zum Verspleißen von Lichtleitfasern, welche einen Träger (3, 4) aufweist, bei dem mindestens eine Fläche (40), die aus einem weichen und elastisch verformbaren Material besteht, eine Nut (5) aufweist, die sich zur Aufnahme der einander gegenüberstehenden jeweiligen Enden (12, 22) von zwei miteinander zu verspleißenden Lichtleitfasern eignet, sowie eine in Anlage gegen die Auflagefläche und die Enden der Lichtleitfasern gehaltene Einrichtung, dadurch gekennzeichnet, daß diese Einrichtung ein unelastisches Teil (8) aufweist, das so in Anlage gegen die Auflagefläche gehalten wird, daß es die Fasern druckbeaufschlagt, wodurch eine Gegenkraft der Wandung der Nut auf die Fasern in radialer Richtung hervorgerufen wird, durch welche deren Axialität gewährleistet ist.

9. Vorrichtung nach Anspruch 8, dadurch gekennzeichnet, daß der Träger ein unelastisches Unterteil (3) aufweist, welches das aus weichem Material bestehende Auflageteil (4) trägt, und daß das Unterteil außerdem Greifschienen (34, 35) aufweist, die sich auf dem Unterteil und auf dem unelastischen Teil abstützen und dessen sicheren Halt in Anlage gegen die Auflagefläche gewährleisten, wodurch erreicht wird, daß das aus weichem Material bestehende Teil und die oberflächenbehandelte unelastische Platte umschlossen sind.

10. Vorrichtung nach einem der Ansprüche 8 und 9, dadurch gekennzeichnet, daß der aus weichem Material bestehende Abschnitt des Trägers ein Block (4) ist.

11. Vorrichtung nach einem der Ansprüche 8 und 9, dadurch gekennzeichnet, daß der aus weichem Material bestehende Abschnitt des Trägers mehrteilig ausgebildet ist (104).

12. Vorrichtung nach einem der Ansprüche 8 bis 11, dadurch gekennzeichnet, daß das oberflächenbehandelte unelastische Teil eine lichtdurchlässige Platte (8) ist.

13. Vorrichtung nach Anspruch 12, dadurch gekennzeichnet, daß das oberflächenbehandelte unelastische lichtdurchlässige Teil eine Glasplatte (8) ist.

14. Vorrichtung nach einem der Ansprüche 8 bis 13, dadurch gekennzeichnet, daß zu beiden Seiten des Trägers zwei Befestigungsschellen (15-17; 25-27) vorgesehen sind, die die Fixierung der zu verbindenden Fasern bezüglich des Trägers in der Weise gestatten, daß die beiden Fasern gegeneinander gespannt sind, wodurch unter der auf diese Weise aufgebrachten dauernd wirksamen Axialkraft der enge Kontakt zwischen den beiden Vorderseiten der Fasern in der Nut über einen längeren Zeitraum aufrechterhalten wird.

15. Vorrichtung nach einem der Ansprüche 8 bis 14, dadurch gekennzeichnet, daß die Nut (5) einen Querschnitt mit punktierten Linien aufweist.

16. Vorrichtung nach Anspruch 15, dadurch gekennzeichnet, daß der Querschnitt der Nut (5) V-förmig ist.

17. Vorrichtung nach einem der Ansprüche 8 bis 16, dadurch gekennzeichnet, daß die Nut (5) einen Querschnitt mit einem oder mehreren gekrümmten Abschnitten aufweist.

18. Vorrichtung nach einem der Ansprüche 8 bis 17, dadurch gekennzeichnet, daß die Nut (5) bezüglich einer zu der Oberfläche aus weichem Material senkrechten Ebene symmetrisch ist.

19. Vorrichtung nach einem der Ansprüche 8 bis 18, dadurch gekennzeichnet, daß beiderseits der Nut (5) fluchtend mit dieser zwei weitere Nuten (61, 62) mit größerem Querschnitt vorgesehen sind, die an die Abmessungen des gesamten Faserverbundes mit dessen Umhüllung angepaßt sind.

20. Vorrichtung nach einem der Ansprüche 8 bis 19, dadurch gekennzeichnet, daß das freie Ende der Nuten mit einer erweiterten Öffnung (71, 72) ausgebildet ist.

21. Vorrichtung nach einem der Ansprüche 8 bis 20, dadurch gekennzeichnet, daß sie mehrere geradlinig und im wesentlichen achsparallel verlaufende Nuten (105) aufweist, wodurch die stirnseitige paarweise Verspleißung von Lichtleitfasern möglich ist, die zu zwei verschiedenen Sätzen gehören.

22. Vorrichtung zum Verspleißen von Lichtleitfasern nach einem der Ansprüche 8 bis 21, welche einen Trägerabschnitt (204, 304, usw.) aufweist, der eine aus weichem Material bestehende und elastisch verformbare Fläche (240, 340, usw.) begrenzt, welche eine oder mehrere Nuten (5), die sich jeweils zur stirnseitigen Aufnahme der Enden (11, 12) von zwei miteinander zu verspleißenden Lichtleitfasern (1, 2) eignen, sowie ein oberflächenbehandeltes unelastisches Teil (208, 308, usw.) aufweist, das in Anlage gegen die Oberfläche des Trägerabschnitts gehalten ist und so eine Druckkraft auf die Enden der Fasern ausübt, wodurch eine Gegenkraft der Wandung der Nut auf die Fasern in radialer Richtung hervorgerufen wird, durch welche deren Axialität gewährleistet ist, dadurch gekennzeichnet, daß der oberflächenbehandelte Abschnitt des unelastischen Teils (208, 308, usw.) bezüglich der Achse der Nut bzw. Nuten eine geknickte Form aufweist.

23. Vorrichtung nach Anspruch 22, dadurch gekennzeichnet, daß der oberflächenbehandelte Abschnitt des unelastischen Teils (208, 308, usw.) einen geschlossenen Querschnitt aufweist.

24. Vorrichtung nach Anspruch 23, dadurch gekennzeichnet, daß der oberflächenbehandelte Abschnitt des unelastischen Teils (208, 308) einen kreisförmigen bzw. im wesentlichen kreisförmigen Querschnitt aufweist.

25. Vorrichtung nach Anspruch 23, dadurch gekennzeichnet, daß der oberflächenbehandelte Abschnitt des unelastischen Teils (408, 508) einen mehreckigen bzw. im wesentlichen mehreckigen geschlossenen Querschnitt aufweist.

26. Vorrichtung nach einem der Ansprüche 22 bis 25, dadurch gekennzeichnet, daß der oberflächenbehandelte Abschnitt der unelastischen Platte (208, 308, 408, 508) und die die Nut aufweisende Fläche (204, 304, 404, 504) zwei homothetische, quasi-komplementäre Flächen sind, die in Ruhelage leicht übereinander liegen, wobei deren Anordnung übereinander die Auflagekraft aufbringt.

27. Vorrichtung nach einem der Ansprüche 22 bis 26, dadurch gekennzeichnet, daß die die Nut aufweisende Fläche (640, 740) und der oberflächenbehandelte Abschnitt des unelastischen Teils (608, 708) zwei homologe und/oder tangentiale Flächen sind, die durch Zusammenwirken ihrer jeweiligen Formen zur Ausübung der relativen Auflagekraft aufeinander geeignet sind.

28. Vorrichtung nach einem der Ansprüche 22 bis 27, dadurch gekennzeichnet, daß der elastische Trägerabschnitt (604, 704) mehrteilig aufgebaut ist, wobei die äußere Umrißlinie der Teile die Oberfläche begrenzt, welche die Nut trägt (640, 740).

29. Vorrichtung nach einem der Ansprüche 22 bis 28, dadurch gekennzeichnet, daß der elastische Trägerabschnitt (204, 404) innen liegt, und daß das unelastische Teil (208, 408) außen liegt.

30. Vorrichtung nach einem der Ansprüche 22 bis 29, dadurch gekennzeichnet, daß der elastische Trägerabschnitt (304, 504) außen liegt, und daß das unelastische Teil (308, 508) außen liegt.

31. Vorrichtung nach einem der Ansprüche 22 bis 30, dadurch gekennzeichnet, daß das außenliegende Teil zumindest teilweise lichtdurchlässig ist.

32. Vorrichtung nach einem der Ansprüche 22 bis 31, dadurch gekennzeichnet, daß das unelastische Teil aus Glas besteht.

33. Vorrichtung nach Anspruch 14, dadurch gekennzeichnet, daß jede Befestigungsschelle auf der Auflageseite einen Block aus weichem Material, der axial auf seiner der Nut gegenüberliegenden Seite in einem Widerlager gelagert ist, sowie ein angelenktes Organ aufweist, das einen Block aus homologem weichen Material aufweist, das in Anlage gegen das erste Teil bringbar ist, wodurch die zwischen diesen beiden Blöcken in Nutrichtung eingelegte Faser beaufschlagt wird.

34. Vorrichtung nach Anspruch 33, dadurch gekennzeichnet, daß der zwischen diesen beiden Blöcken gehaltene Faserabschnitt teilweise in ein Rohr bzw. einen Schlauch, beispielsweise einen Isoliermantel, eingesetzt ist.

## Claims

1. Method for joining optical fibres, of the type comprising the preliminary operation consisting in:

a/. preparation of the ends of at least two optical fibres for their joining; characterized by the following operation:

b/. insertion of the ends of at least two fibres to be joined, face to face, in a groove (5), provided in one surface of a base (4) which, at least at the level of the said surface, is made of a material which is soft compared with the fibres and is elastically deformable, while lightly urging the two fibres (I, 2) towards each other so as to ensure the intimate contact of their front faces; and while maintaining a rigid surfaced piece (8) bearing against the said surface of the base, thus exerting, a pressure effect on the said fibres, engendering a radial reaction of the groove wall on the fibres, ensuring alignment of the latter.

2. Method according to Claim 1, characterized in that the operation b/. comprises the following steps:

b1. bringing the front face (12) of one of the fibres to substantially mid-way along the groove;

b2. fixing this fibre relative to the base (15),

b3. bringing the front face (22) of the second fibre in the groove into contact with the front face (12) of the first fibre; and

b4. similarly fixing the second fibre relative to the base, on the other side (25).

3. Method according to Claim 2, characterized in that each of the fixing steps b2 and b4 is carried out in such a way as to urge the two fibres towards each other, which, through the permanent axial thrust thus exerted, maintains over time the close contact between the two front faces of the fibres in the groove.

4. Method according to one of Claims 1 to 3, characterized in that the groove is previously filled with an index matching fluid (59), which, as well as improving the transmission of light from one fibre to the other, also effects a self-cleaning of the zone contained between the two front faces of the fibres, taking account of the piston effect produced by the front faces of the two fibres in the groove during their relative introductory movement.

5. Method according to one of Claims 1 to 4, characterized in that the said rigid piece (8) is transparent.

6. Method according to Claim 5, characterized in that the step b further comprises the application of respective luminous radiation to the two fibres to be connected, which translates into the appearance of a point of light on the front face of each fibre, the two front faces being considered in intimate contact when the points of light have attenuated or have practically disappeared.

7. Method according to either of Claims 5 and 6, characterized in that the prepared ends of the optical fibres are moreover coloured on the sides.

8. Apparatus for joining optical fibres, of the type comprising a base (3, 4), at least one surface (40) of which, constructed of soft elastically deformable material, comprises a groove (5), suitable for receiving, face to face, the respective ends (12, 22) of two optical fibres to be joined, as well as a unit kept bearing against the surface of the base and against the ends of the optical fibres, characterized in that this unit comprises a rigid surfaced piece (8), whose continued bearing against the said surface of the base exerts a pressure effect on the said ends of the fibres, engendering a radial reaction of the groove wall on the ends of the fibres and thus ensuring alignment of the latter.

9. Apparatus according to Claim 8, characterized in that the base comprises a rigid baseplate (3) supporting its part made of soft material (4), and in that the baseplate also comprises grips (34, 35) bearing on this baseplate and on the rigid piece in order to ensure the continued bearing of the latter against the said surface of the base, thus effecting a girdling of the part made of soft material and of the rigid surfaced plate.

10. Apparatus according to either of Claims 8 and 9, characterized in that the part of the base which is made of soft material is a block (4).

11. Apparatus according to either of Claims 8 and 9, characterized in that the part made of soft material is in several pieces (104).

12. Apparatus according to one of Claims 8 to 11, characterized in that the said rigid surfaced piece is a transparent plate (8).

13. Apparatus according to Claim 12, characterized in that the said transparent rigid surfaced piece is a glass plate (8).

14. Apparatus according to one of Claims 8 to 13, characterized in that it comprises two cramps (15—17: 25—27), on either side of the base, allowing the fixing relative to the base of the fibres to be connected, in such a way as to urge the two fibres towards each other, which, by the permanent axial thrust thus exerted, maintains over time the close contact between the two front faces of the fibres in the grooves.

15. Apparatus according to one of Claims 8 to 14, characterized in that the groove (5) possesses a cross-section comprising broken lines.

16. Apparatus according to Claim 15, characterized in that the cross-section of the groove (5) is V-shaped.

17. Apparatus according to one of Claims 8 to 16, characterized in that the groove (5) possesses a cross-section comprising one or more curvilinear segments.

18. Apparatus according to one of Claims 8 to 17, characterized in that the groove (5) is symmetric about a plane perpendicular to the said surface made of soft material.

19. Apparatus according to one of Claims 8 to 18, characterized in that two other grooves (61, 62) of larger cross-section, adapted to the dimensions of the assemblage of the fibre with its cladding, are provided on either side of the said groove (5) and aligned with it.

20. Apparatus according to one of Claims 8 to 19, characterized in that the free end of the grooves is shaped into a flared outlet (71, 72).

21. Apparatus according to one of Claims 8 to 20, characterized in that it comprises several straight grooves (105) with essentially parallel axes, which allows the joining end to end, in pairs, of optical fibres belonging to two different sets.

22. Apparatus for joining optical fibres according to one of Claims 8 to 21, comprising a base-part (204, 304, etc.), which defines a surface (240, 340, etc.), made of soft, elastically deformable material and equipped with one or more grooves (5) each suitable for receiving, face to face, the ends (11, 12) of two optical fibres (1, 2) to be joined, as well as a rigid surfaced piece (208, 308, etc.), whose continued bearing on the said surface of the base-part exerts a pressure effect on the ends of the fibres, engendering a radial reaction of the groove wall on the ends of the fibres and ensuring the alignment of the latter, characterized in that the surfaced part of the rigid piece (208, 308, etc.) is of inflected shape relative to the axis of the groove or grooves.

23. Apparatus according to Claim 22, characterized in that the surfaced part of the rigid piece (208, 308, etc.) possesses a closed cross-section.

24. Apparatus according to Claim 23, characterized in that the surfaced part of the rigid piece (208, 308) possesses a circular or essentially circular cross-section.

25. Apparatus according to Claim 23, characterized in that the surfaced part of the rigid piece (408, 508) possesses a polygonal or essentially polygonal closed cross-section.

26. Apparatus according to one of Claims 22 to 25, characterized in that the surfaced part of the rigid plate (208, 308, 408, 508) and the groove-carrying surface (204, 304, 404, 504) are two homothetic, quasi-complementary surfaces, slightly overlapping in the unstressed condition, their positioning on each other exerting the bearing force.

27. Apparatus according to one of Claims 22 to 26, characterized in that the groove-carrying surface (640, 740) and the surfaced part of the rigid piece (608, 708) are two homologous and/or tangent surfaces, capable of exerting on each other the said relative bearing force by cooperation of their respective shapes.

28. Apparatus according to one of Claims 22 to 27, characterized in that the elastic base-part (604, 704) is constructed in several pieces, whose external contour defines the groove-carrying surface (640, 740).

29. Apparatus according to one of Claims 22 to 28, characterized in that the elastic base-part (204, 404) is inside, and the rigid piece (208, 408) outside.

30. Apparatus according to one of Claims 22 to 29, characterized in that the elastic base-part (304, 504) is outside, and the rigid piece (308, 508) inside.

31. Apparatus according to one of Claims 22 to 30, characterized in that the external piece is transparent, at least in part.

32. Apparatus according to one of Claims 22 to 31, characterized in that the rigid piece is made of glass.

33. Apparatus according to Claim 14, characterized in that each cramp comprises, on the base side, a block made of soft material axially butt-seated on its side away from the groove, and a jointed unit comprising a homologous block of soft material able to bear against the first, which has the effect of urging the fibre seated between these two blocks under the guidance of the groove.

34. Apparatus according to Claim 33, characterized in that the portion of the fibre held between these two blocks is partially seated inside a tube such as insulating sleeving.

FIG. 1

FIG. 2

FIG. 3

FIG. 4

FIG. 5

FIG. 6

FIG. 7

FIG. 8

FIG. 9

11     12   59         21

19                        29

53      22     **FIG. 10**

( fond de la rainure 5)

34      8    51   54   12   55   52     40

33                            4

**FIG. 11**

3        53

61     5

40              **FIG. 12**

71

41    74    75

104          108

133                 134

5   103

**FIG. 13**

FIG. 14

FIG. 15

4

FIG. 16

FIG. 17

FIG. 18

FIG. 19

FIG. 20

FIG. 21

FIG. 22

FIG. 23